# EUROPEAN PATENT SPECIFICATION

(11) **EP 2 567 138 B1**
(45) Date of publication and mention of the grant of the patent: **06.04.2016**
(21) Application number: 11721082.3
(22) Date of filing: 26.04.2011
(51) Int. Cl.: F16L 53/00

(54) **PIPELINE**
ROHRLEITUNG
PIPELINE

(30) Priority: 05.05.2010 GB 201007462
(43) Date of publication of application: 13.03.2013
(73) Proprietor: Technip France, 92400 Courbevoix (FR)
(72) Inventor: DENNIEL, Sylvain, Aberdeen AB10 6PJ (GB)
(74) Representative: Earnshaw, Geoffrey Mark
(86) International application number: PCT/GB2011/050811
(87) International publication number: WO 2011/138596

(56) References cited:
- DE-A1- 3 202 854
- DE-U1-202008 003 365
- DE-U1-202008 014 092
- JP-A- 60 208 693
- US-A1- 2010 209 085

## Description

The present invention relates to a pipeline to be heated and a system and method therefor.

Offshore oil and gas production is being pushed both into deeper waters, and pushed to extend further from or between operational facilities. As pipelines and flowlines used in such situations get longer and/or colder, the risk of hydrate plugging and wax formation increases, from an already known problem to expected greater problems.

The formation of hydrates and waxes in oil and gas pipelines can block such pipelines. Conventional methods of remediating the problem of hydrate or wax plugs in a pipeline can involve the use of chemical agents; blowdowns and pigging operations, all of which require at least temporary downtime or non-operation of the pipeline (for the transfer of oil and gas, etc.), along with associated costs for the cleaning operation.

An alternative form of remediation is direct electric heating of the pipeline, whereby a current is passed down the pipeline. Heat is produced by the electrical power loss from the current flowing through the pipeline, caused by a number of effects, including resistance and possibly eddy currents.

GB 2341442 A discloses a pipeline heating system in which a portion of the pipeline acts as a heating element, having a feeder cable and a return cable at opposite ends of the pipeline to provide the direct impedance heating. However, the feeder cable is outside the whole length of the pipeline portion, which requires separate installation, insulation and maintenance.

US 6,142,707 shows a system for direct electric heating of a pipe-in-pipe flow line having an outer carrier pipe and a concentric inner pipe, such that power passes along inner pipe and back along the outer pipe. However, even with cover around the outer pipe, a significant portion such as 40-60% of the power supplied to the pipeline is still dissipated to the surrounding seawater, and cannot therefore be effective for heating of fluids transported by the pipeline.

US 2009/0213196 shows a direct electric heating system for a subsea steel pipeline with a piggyback cable and a shell-type magnetic core. This requires a special magnetic core, as well as a non-circular manufacturing process, especially for a square or triangular pipeline as suggested, as well as significant residual air space within the pipeline.

It is an object of the present invention to provide an improved direct electric heated pipeline and system and method for electrically heating a pipeline.

Thus, according to one aspect of the present invention, there is provided a pipeline for use in the offshore production of hydrocarbons comprising:
(i) an electrically conductive inner pipe,
(ii) a concentric outer layer,
(iii) one or more concentric intermediate layers between the inner pipe and the outer layer, at least one of which is an insulation layer,
(iv) a concentric electrically conductive mesh,
(v) at least some insulation between the inner pipe and the electrically conductive mesh; and
(vi) at least one electrical current pathway between the electrically conductive inner pipe and the electrically conductive mesh;
able to provide direct electric heating of the electrically conductive inner pipe and current return through the electrically conductive mesh.

In this way, there is a simple and usually thin mesh that allows electric heating along the inner pipe with easy manufacture, and which avoids any electrical current flowing along an outer pipe that would dissipate power to the surrounding seawater. The present invention therefore significantly increases the simplicity and efficiency of the electrical heating of the pipeline.

The electrically conductive mesh may be provided along the pipeline in any convenient or suitable arrangement that allows for flow of an electric current separate to that passing along the conductive inner pipe.

According to one embodiment of the present invention, the conductive mesh is around or within at least one of the intermediate layers or the outer layer. That is, the conductive mesh is around an intermediate layer or within or embedded within an intermediate layer, or within or embedded within the outer layer.

The pipeline may comprise a number of intermediate layers, at least one of which is an insulation layer, optionally an electrical and/or thermal insulation layer. There is at least some insulation between the inner pipe and the conductive mesh, optionally one or more insulation layers. Suitable electrical insulation includes various plastics and rubber materials, and suitable thermal insulation also includes various foams, in particular, low density foams, known in the art.

The skilled man is aware of pipelines comprising one or a number of intermediate layers between an inner pipe and an outer layer. Such intermediate layers may be provided for one or more purposes, such as thermal and/or electrical insulation, protectiveness, reinforcement, strength, and/or for assisting or absorbing axial and bending loads.

Generally, the outer layer is an outer protective cover, or an external sheath, or an outer pipe.

According to another embodiment of the present invention, the conductive mesh is embedded within an intermediate insulation layer.

The nature and thickness of the electrically conductive inner pipe, the nature, thickness, number and type of intermediate layers, and the nature and thickness of the concentric outer layer, will vary according to the requirements of the pipeline. However, it is a feature of the present invention that the pipeline is formed from a number of concentric layers around the inner pipe, thus maintaining the simplicity of manufacturing a concentric pipeline and avoiding the manufacture of a non-circular pipeline such as those shown in US2009/0214196.

The electrically conductive inner pipe may be formed from any suitable material or combination of materials, including but not limited to steel.

The electrically conductive mesh may be formed from any suitable material or combination of materials, including but not limited to copper.

The thickness of the conductive mesh may be related to the electrically conductive requirement and/or power supply or input. Preferably, the conductive mesh is relatively thin, such as in the range 1-5mm thick, preferably 2mm thick. Such a thin mesh can easily be added into the manufacture of a concentric pipeline, and/or added into the manufacture of an intermediate layer, such as an insulating layer, which can then be used in the manufacture of the pipeline without change to the pipeline manufacturing process.

To allow for a current return, the pipeline includes one or more electrical current pathways between the inner pipe and the conductive mesh at one or more suitable locations along the pipeline. Such a pathway may be formed at the end of the pipeline. The skilled man is aware of forming a simple electrical current pathway using an electrically conductive material at a suitable location, such as at a suitable conjunction between two or more pipe sections forming the pipeline, and/or at a pipeline termination.

The pipeline may be a pipe-in-pipe flowline. Pipe-in-pipe flowlines are known in the art, and generally comprise an outer pipe and at least one inner pipe. Such flowlines are used to transport or convey fluids such as hydrocarbons, in particular oil and gas, between two or more static and/or moveable locations. Such flowlines are generally wholly or substantially under water or marine pipelines, and are also commonly termed "offshore" pipelines. Such flowlines may convey fluids between vessels, and/or be located at or near a seabed for the transportation of fluid from locations such as an oil head, in particular a remote oil head, to an underwater facility and/or to a riser towards sea level, and/or directly to an onshore facility.

According to a second aspect of the present invention, there is provided a system for electrically heating a pipeline comprising:
a pipeline as defined hereinabove having an electrically conductive inner pipe and a concentric electrically conductive mesh;
at least one electrical current pathway between the inner pipe and the conductive mesh;
a power input connected to the inner pipe; and
a current return connected to the conductive mesh to receive current from the power input, inner pipe and electrical current pathway.

According to a third aspect of the present invention, there is provided a method of electrically heating a pipeline comprising:
passing current from a power input along an electrically conductive inner pipe of a pipeline as defined hereinabove;
passing the current from the inner pipe along at least one electrical current pathway to a concentric electrically conductive mesh; and passing current along the conductive mesh to a current return.

The power input of the system and method is able to provide power to the inner pipe. Such power could be provided from a suitable power source. The power source may be any suitable apparatus, unit or device, such as an electrical generator or similar known in the art. Electric heating of pipelines can be provided both by AC and DC sources, although AC power is generally more advantageous for transmitting power along a longer pathway. Electric power is generally provided at a high voltage such as several kilovolts and commonly at a high current.

The current return of the system and method is able to receive current from the conductive mesh. It is possible for the current return to subsequently use any power remaining from the current mesh, and/or to be a power sink. Preferably, the current return is connected to the power input, thereby creating a complete circuit around the pipeline.

The power input may be directly connected to the inner pipe, for example using direct connection to one end of the pipeline. Preferably, the power input is connected to the inner pipe via a power connector in the pipeline able to provide an electrical current pathway between the conductive mesh and the inner pipe.

Similarly, the current return may be directly connected to the conductive mesh, for example using direct connection to one end of the pipeline. Preferably, the current return is connected to the pipeline via a power connector.

In one embodiment of the present invention, the power input and current return are attached to one or more power umbilicals. The power umbilicals are able to provide an electrical current pathway to the power input, and away from the current return.

The or each power umbilical is able to allow the location of the power input into the inner pipe, and/or the location of the current return from the conductive mesh, to be any suitable distance from a power source.

The present invention provides electric heating, in particular direct electric heating, to a pipeline such as a pipe-in-pipe flowline. Preferably, the flowline is a fluid flowline, more preferably being an oil and/or gas pipeline. The types and ranges of hydrocarbons passable along oil and/or gas pipelines are known in the art, and the degree to which such pipelines require heating in order to prevent and/or minimise plug formations, for example hydrate and wax plugs, is well known to those skilled in the art.

The present invention encompasses all combinations of various embodiments or aspects of the invention described herein. It is understood that any and all embodiments of the present invention may be taken in conjunction with any other embodiment to described additional embodiments of the present invention. Furthermore, any elements of an embodiment may be combined with any and all other elements of any of the embodiments to describe additional embodiments.

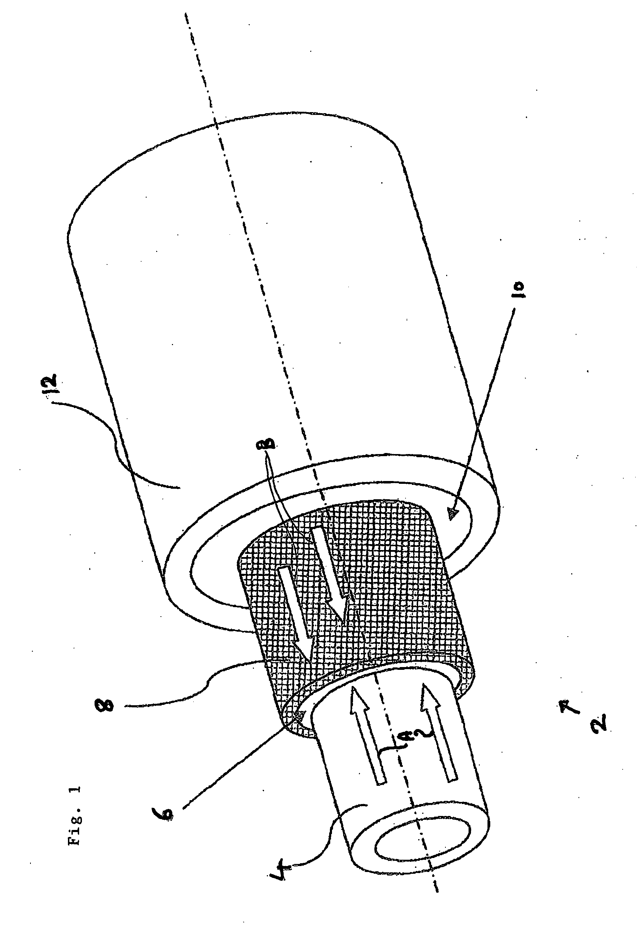

An embodiment of the present invention will now be described by way of example only, and with reference to the accompanying diagrammatic Figure 1 which shows a schematic illustration of a pipeline according to one embodiment of the present invention.

Referring to the drawing, Figure 1 shows a pipeline 2 according to the present invention. The pipeline 2 may be, by way of example only, an oil pipeline able to pass oil from an underwater facility on a seabed, such as a well head or processing unit, to a vessel, such as a seagoing oil transporter, and/or floating oil processing plant.

The pipeline 2 has an electrically conductive inner pipe 4, generally for the passage of a fluid such as oil or gas as discussed above, and optionally formed of steel in a manner known in the art.

Concentrically around the inner pipe 4 is a first intermediate layer 6. The nature and thickness of the first intermediate layer 6 depends upon the requirement of the pipeline 2. In the example shown in figure 1, the first intermediate layer 6 is preferably an electrically insulation layer which may be formed from known plastics and/or rubber materials such as silicon rubber or other fluoropolymer materials, and which can provide at least some electrical insulation between the inner pipe 4 and the conductive mesh as described hereinafter.

Figure 1 shows the pipeline 2 having a concentric electrically conductive mesh 8. The thicknesses of the pipe, layers and mesh shown in Figure 1 are diagrammatic only, and are relatively similar for clarity purposes only. In practice, a pipeline may comprise a number of intermediate layers, optionally of different materials and/or different thicknesses, designed to provide the insulation, strength and protective properties to the overall pipeline. Thus, in Figure 1, the conductive mesh 8 is shown having a thickness which may not be in relevant proportion to the thicknesses of the other layers shown in Figure 1.

The conductive mesh 8 may be formed of copper and/or any other conductive material, and is preferably relatively thin compared to the other layers so as to minimise and/or avoid any disruption to the conventional manufacturing process of the pipeline 2.

In Figure 1, the conductive mesh 8 is shown to be located concentrically around the first intermediate layer 6.

Around the conductive mesh 8 is a second intermediate layer 10, preferably also being an insulation layer, and optionally formed from the same or different material as that of the first intermediate layer 6. Preferably, the second intermediate layer 10 is thicker than the first intermediate layer 6 to maintain as much heating internally as possible.

Around the second intermediate layer 10, the pipeline 2 has a concentric outer layer 12, generally being an outer sheath or protective layer where the pipeline 2 is a single pipeline, or a second (outer) pipe where the pipeline 2 is a pipe-in-pipe flowline known in the art.

Where the pipeline 2 is a pipe-in-pipe flowline, there is commonly an annular gap between the inner and outer pipes, which gap can house insulation as an intermediate layer. Such insulation can house an electrically conductive mesh, and be formed from the same of similar materials as discussed above, including aerogels. The manufacture of an electrically conductive mesh within an intermediate layer, in particular within an insulation layer, is a simple manufacturing step that maintains easy fabrication of the pipeline.

Not shown in Figure 1 is an electrical current pathway between the inner pipe 4 and the conductive mesh 8. Any pathway or bridge to create such an electrical connection is known to the person skilled in the art, such as using one or more electric cables or lines, at a suitable conjunction of the pipeline with one or more other pipelines, or between conjoined pipe sections and/or at a pipeline terminal.

In use, Figure 1 shows the passing of current in the direction of arrows A from a power input (not shown) along the electrically conductive inner pipe 4 so as to provide direct electric heating of the fluid material passing within the inner pipe 4 in a manner known in the art. The current then passes from the inner pipe 4 along at least one electrical current pathway to the concentric electrically conductive mesh 8, and then along the conductive mesh 8 as shown by arrows B to a current return.

In this way, there is provided a current loop within the pipeline 2 which may maintains efficient heating of the inner pipe 4 and its contents, whilst maintaining simplicity of manufacture of the overall pipeline 2. In particular, the conductive mesh can be relatively thin so as to fit with any existing pipeline design manufacturing process, particularly if the conductive mesh is provided within an otherwise conventional intermediate layer, such as a conventional insulation layer. This also allows such a pipeline to be formed in a conventional process, without requiring adaption for a different pipeline cross-sectional shape and additional cables.

The present invention provides a pipeline, system and method for heating at least one pipeline section which is advantageously more efficient than conventional systems, so that a higher amount of supplied energy is dedicated to the heating of the pipeline section. There is no current circulating in an outer pipe of a pipe-in-pipe flowline in the present invention. As such, loss of energy by dissipation from an outer pipe to the surrounding environment, in particular surrounding seawater, is avoided.

Various modifications and variations to the described embodiments of the invention will be apparent to those skilled in the art without departing from the scope of the invention as defined herein. Although the invention has been described in connection with specific preferred embodiments it should be understood that the invention as defined herein should not be unduly limited to such specific embodiments.

## Claims

1. A pipeline (2) for use in the offshore production of hydrocarbons comprising:
(i) an electrically conductive inner pipe (4),
(ii) a concentric outer layer (12),
(iii) one or more concentric intermediate layers between the inner pipe and the outer layer, at least one of which is an insulation layer (6),
(iv) a concentric electrically conductive mesh (8),
(v) at least some insulation between the inner pipe and the electrically conductive mesh; and
(vi) at least one electrical current pathway between the electrically conductive inner pipe and the electrically conductive mesh;
able to provide direct electric heating of the electrically conductive inner pipe and current return through the electrically conductive mesh.

2. A pipeline (2) as claimed in claim 1 wherein the conductive mesh (8) is around or within at least one of the intermediate layers or the outer layer (12).

3. A pipeline (2) as claimed in claim 2 wherein the conductive mesh (8) is embedded within an intermediate insulation layer.

4. A pipeline (2) as claimed in any one of the preceding claims wherein at least one of the intermediate layers is a thermal insulation layer.

5. A pipeline (2) as claimed in any one of the preceding claims wherein the conductive mesh (8) is formed from copper.

6. A pipeline (2) as claimed in any one of the preceding claims wherein the conductive mesh (8) is in the range 1-5mm thick.

7. A pipeline (2) as claimed in claim 6 wherein the conductive mesh (8) is 2mm thick.

8. A pipeline (2) as claimed in any one of the preceding claims wherein the pipeline is a pipe-in-pipe flowline.

9. A system for electrically heating a pipeline (2) comprising:
a pipeline as defined in any one of claims 1-8 having an electrically conductive inner pipe (4) and a concentric electrically conductive mesh(8); at least one electrical current pathway between the inner pipe and the conductive mesh;
a power input connected to the inner pipe ; and
a current return connected to the conductive mesh to receive current from the power input, inner pipe and electrical current pathway.

10. A method of electrically heating a pipeline (2) comprising:
passing current from a power input along an electrically conductive inner pipe (4) of a pipeline as defined in any one of claims 1-8;
passing the current from the inner pipe along at least one electrical current pathway to a concentric electrically conductive mesh (8); and
passing current along the conductive mesh to a current return.

## Patentansprüche

1. Eine Rohrleitung (2) zur Verwendung bei der Offshore-Förderung von Kohlenwasserstoffen, beinhaltend:
(i) ein elektrisch leitendes Innenrohr (4),
(ii) eine konzentrische Außenschicht (12),
(iii) eine oder mehrere konzentrische Zwischenschichten zwischen dem Innenrohr und der Außenschicht, wobei mindestens eine davon eine Isolierschicht (6) ist,
(iv) ein konzentrisches elektrisch leitendes Gitter (8),
(v) wenigstens etwas Isolierung zwischen dem Innenrohr und dem elektrisch leitenden Gitter; und
(vi) wenigstens einen Strompfad zwischen dem elektrisch leitenden Innenrohr und dem elektrisch leitenden Gitter;
geeignet zum Bereitstellen von direkter elektrischer Erwärmung des elektrisch leitenden Innenrohrs und Stromrückführung durch das elektrisch leitende Gitter.

2. Rohrleitung (2) gemäß Anspruch 1, wobei das leitende Gitter (8) um oder innerhalb wenigstens einer der Zwischenschichten der Außenschicht (12) angeordnet ist.

3. Rohrleitung (2) gemäß Anspruch 2, wobei das leitende Gitter (8) innerhalb einer Zwischenisolierschicht eingebettet ist.

4. Rohrleitung (2) gemäß einem der vorhergehenden Ansprüche, wobei wenigstens eine der Zwischenschichten eine Wärmeisolierschicht ist.

5. Rohrleitung (2) gemäß einem der vorhergehenden Ansprüche, wobei das leitende Gitter (8) aus Kupfer gebildet ist.

6. Rohrleitung (2) gemäß einem der vorhergehenden Ansprüche, wobei die Dicke des leitenden Gitters (8) im Bereich von 1-5 mm liegt.

7. Rohrleitung (2) gemäß Anspruch 6, wobei das leitende Gitter (8) eine Dicke von 2 mm aufweist.

8. Rohrleitung (2) gemäß einem der vorhergehenden Ansprüche, wobei die Rohrleitung eine Doppelrohr-Förderleitung ist.

9. Ein System zum elektrischen Erwärmen einer Rohrleitung (2), beinhaltend:
eine wie in einem der Ansprüche 1-8 definierte Rohrleitung mit einem elektrisch leitenden Innenrohr (4) und einem konzentrischen elektrisch leitenden Gitter (8);
wenigstens einen Strompfad zwischen dem Innenrohr und dem leitenden Gitter;
einen mit dem Innenrohr verbundenen Leistungseingang; und
eine mit dem leitenden Gitter verbundene Stromrückführung zum Erhalten von Strom von dem Leistungseingang, dem Innenrohr und dem Strompfad.

10. Ein Verfahren zum elektrischen Erwärmen einer Rohrleitung (2), beinhaltend:
Führen von Strom von einem Leistungseingang entlang einem elektrisch leitenden Innenrohr (4) einer Rohrleitung, wie gemäß einem der Ansprüche 1-8 definiert;
Führen des Stroms von dem Innenrohr entlang wenigstens einem Strompfad zu einem konzentrischen elektrisch leitenden Gitter (8); und
Führen von Strom entlang dem leitenden Gitter zu einer Stromrückführung.

## Revendications

1. Un pipeline (2) destiné à être utilisé dans la production en mer d'hydrocarbures comprenant:
(i) un tube interne électro-conducteur (4),
(ii) une couche externe concentrique (12),
(iii) une ou plusieurs couches intermédiaires concentriques entre le tube interne et la couche externe, l'une d'entre elles au moins étant une couche d'isolation (6),
(iv) un treillis électro-conducteur concentrique (8),
(v) au moins une isolation quelconque entre le tube interne et le treillis électro-conducteur ; et
(vi) au moins une voie de passage de courant électrique entre le tube interne électro-conducteur et le treillis électro-conducteur ;
à même de fournir un chauffage électrique direct du tube interne électro-conducteur et un retour de courant par le treillis électro-conducteur.

2. Un pipeline (2) tel que revendiqué dans la revendication 1 dans lequel le treillis conducteur (8) est autour ou au sein d'au moins l'une des couches intermédiaires ou de la couche externe (12).

3. Un pipeline (2) tel que revendiqué dans la revendication 2 dans lequel le treillis conducteur (8) est intégré au sein d'une couche d'isolation intermédiaire.

4. Un pipeline (2) tel que revendiqué dans l'une quelconque des revendications précédentes dans lequel au moins l'une des couches intermédiaires est une couche d'isolation thermique.

5. Un pipeline (2) tel que revendiqué dans l'une quelconque des revendications précédentes dans lequel le treillis conducteur (8) est formé à partir de cuivre.

6. Un pipeline (2) tel que revendiqué dans l'une quelconque des revendications précédentes dans lequel le treillis conducteur (8) est compris dans la gamme d'épaisseur allant de 1 à 5 mm.

7. Un pipeline (2) tel que revendiqué dans la revendication 6 dans lequel le treillis conducteur (8) a une épaisseur de 2 mm.

8. Un pipeline (2) tel que revendiqué dans l'une quelconque des revendications précédentes dans lequel le pipeline est une conduite d'écoulement à double enveloppe.

9. Un système pour chauffer électriquement un pipeline (2) comprenant :
un pipeline tel que défini dans l'une quelconque des revendications 1 à 8 ayant un tube interne électro-conducteur (4) et un treillis électro-conducteur concentrique (8) ;
au moins une voie de passage de courant électrique entre le tube interne et le treillis conducteur ;
une entrée d'alimentation connectée au tube interne ; et
un retour de courant connecté au treillis conducteur pour recevoir du courant provenant de l'entrée d'alimentation, du tube interne et de la voie de passage de courant électrique.

10. Une méthode pour chauffer électriquement un pipeline (2) comprenant :
le fait de faire passer du courant provenant d'une entrée d'alimentation le long d'un tube interne électro-conducteur (4) d'un pipeline tel que défini dans l'une quelconque des revendications 1 à 8 ;
le fait de faire passer le courant du tube interne le long d'au moins une voie de passage de courant électrique jusqu'à un treillis électro-conducteur concentrique (8) ; et
le fait de faire passer du courant le long du treillis conducteur jusqu'à un retour de courant.
